**Europäisches Patentamt**

**European Patent Office**

**Office européen des brevets**

(19)

(11) Veröffentlichungsnummer: **0 149 250**
**B1**

(12) # EUROPÄISCHE PATENTSCHRIFT

(45) Veröffentlichungstag der Patentschrift:
**12.08.87**

(51) Int. Cl.⁴: **G 02 B 6/44,** G 02 B 6/36

(21) Anmeldenummer: **84116438.7**

(22) Anmeldetag: **28.12.84**

(54) **Verteilergestell für Glasfaser-Kabelenden.**

(30) Priorität: **30.12.83 DE 3347621**

(43) Veröffentlichungstag der Anmeldung:
**24.07.85 Patentblatt 85/30**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**DE-A-3 306 502**
**FR-A-2 363 243**
**FR-A-2 515 466**
**US-A-4 373 776**
**US-A-4 418 982**

**PATENTS ABSTRACTS OF JAPAN, Band 7, Nr. 198**
**(P-220) 1343 , 2. September 1983**

(73) Patentinhaber: **Wilhelm Sedlbauer GmbH Fabrik**
**für Feinmechanik und Elektronik, Quagliostrasse**
**6, D-8000 München 90 (DE)**

(72) Erfinder: **Dankesreiter, Franz, Ebentalsiedlung 8,**
**D-8352 Grafenau (DE)**
Erfinder: **Muscher, Siegfried, Rachelweg 15, D-8352**
**Grafenau (DE)**

(74) Vertreter: **Seibert, Rudolf, Dipl.- Ing.,**
**Tattenbachstrasse 9, D-8000 München 22 (DE)**

EP 0 149 250 B1

## Beschreibung

Die Vorliegende Erfindung bezieht sich auf ein Verteilergestell für Glasfaser-Kabelenden. Derartige Gestelle werden ähnlich wie Kabelendgestelle herkömmlicher Nachrichtenkabel benötigt, die Enden, d.h. die einzelnen Glasfasern, die in Bündeln zusammengefaßt ein Glasfaser-Kabel bilden, den einzelnen Emfangs- bzw. Demodulationseinrichtungen zuzuführen.

Die Besonderheit bei einem derartigen Verteilergestell für Glasfaser-Kabelenden gegenüber anderen Verteiler- oder Rangiergestellen für übliche elektrische Kabel liegt einmal darin, daß eine Informationsabnahme der einzelnen Kabelfasern für Meß- und Überwachungszwecke nicht wie bei elektrischen Kabeln durch einen Parallelanschluß beziehungsweise eine induktive Auskopplung möglich ist, sondern daß in jedem Fall der Glasfaserweg aufgetrennt werden muß, um den über die Glasfaser geleiteten Informationsfluß dem Meß- bzw. Überwachungsgerät zukommen zu lassen.

Zu diesem Zweck sind Glasfaserkupplungen bekannt geworden, die mit höchster Präzision die zwei Enden von zwei Glasfaserleitungen, z. B. auch von einem Kabelende und einer Anschlußleitung in Form eines sog. Pigtails miteinander verbinden. Diese mit sehr hohem Fertigungsaufwand hergestellten Glasfaserkupplungen sollen deshalb in einem Verteilergestell nur dort eingesetzt werden, wo tatsächlich ein Auftrennen des Lichtwegs notwendig ist.

Eine weitere Besonderheit eines derartigen Gestells besteht darin, daß die einzelnen Glasfaserleitungen, obwohl es ihre Biegsamkeit zulassen würde nur möglichst wenig gekrümmt werden sollen, da im Gegensatz zu elektrischen Leitern die Dämpfung in den Kabeladern abhängig von der Verlegung bzw. den einzelnen Krümmungsradien ist. Während also bei einem Verteilergestell für die Ader eines elektrischen Kabels nur dafür zu sorgen ist, daß die einzelnen Leitungen nicht in Spulenform verlegt werden, da hierdurch ein überhöhter induktiver Widerstand entstehen würde, muß bei einem Verteilergestell für Glasfaserkabelenden eine Anordnung getroffen werden, bei der trotz der Anordnung von Kupplungen eine möglichst geradlinige Führung des Informationsflusses vom Kabelende zu weiteren Anschlußleitungen garantiert ist.

Umgekehrt steht für derartige Verteilergestelle nicht ein beliebig großer Raum zur Verfügung, wobei zu berücksichtigen ist, daß im Allgemeinen etwa 10 Glasfasern zu einem Bündel und wiederum 7-10 Bündel zu einem Kabel zusammengefaßt sind und dementsprechend in einem oder zumindest in wenigen Gestellen verteilt und mit Anschlußleitungen gekoppelt werden müssen.

Aufgabe der Erfindung ist es somit ein Verteilergestell für Glasfaser-Kabelenden zur Aufteilung der Faserbündel bzw. der einzelnen Glasfasern eines Glasfaser-Kabels anzugeben, bei dem außer dem Anschluß der Kabelenden mit Anschlußleitungen Glasfaserkupplungen in einer der Zahl der Glasfasern entsprechenden Menge leicht zugänglich untergebracht werden können, bei dem die einzelnen Glasfaserkupplungen ohne Beeinträchtigung der anderen Glasfaserkupplungen zugänglich sind, eine Leitungsführung garantiert ist, die mit ganz wenigen Krümmungen mit relativ großem Radius trotz geringen Platzbedarfes auskommt und bei dem eine einfache Handhabung garantiert ist.

Diese Aufgabe wird bei einem Verteilergestell für Glasfaser-Kabelenden durch Realisieren der Merkmale des Patentanspruches 1 gelöst.

Bei dem Verteilergestell für Glasfaser-Kabelenden nach der Erfindung wird das Gestell über die Höhe in mindestens zwei Abschnitte unterteilt, nämlich einen Aufnahmebereich zur Aufnahme der Spleißverbindungen zwischen den einzelnen Glasfasern des Kabels und ersten flexiblen Anschlußleitungen und in einem Bereich zur Aufnahme der Glasfaserkupplungen, wobei die Kupplungen frei von den Enden der ersten flexiblen Anschlußleitungen in Form sog. Pigtails gehalten werden dadurch, daß dieses selbst nahe des Endes, das in die Kupplung eingeführt wird, in einer Klemme gehalten sind, und zwar jede einzelne Faser in einer eigenen Klemme.

Dabei erfolgt die Leitungsführung derart, daß beispielsweise von unten oder von oben zunächst die Glasfaserbündel in das Gestell eingeführt werden und im unteren Bereich die einzelnen Fasern mit dem einen Ende von ersten Anschlußleitungen verspleißt (verschweißt) werden und die Spleißverbindung in diesem Bereich vorzugsweise in Magazinen abgelegt werden. Aus diesen Magazinen, d.h. also aus dem unteren Aufnahmebereich werden die ersten Anschlußleitungen gem. einer vorteilhaften Ausgestaltung der Erfindung auf der einen Seite des Verteilergestells nach oben in den Bereich der Glasfaserkupplung geführt. In diesem Bereich sind nahe der Mitte übereinander die einzelnen Klemmen zum Halten der freien Enden der ersten Anschlußleitungen vorgesehen, durch die die einzelnen Enden der ersten Anschlußleitungen gesteckt werden, und zwar soweit, daß auf der Rückseite der Klemmen nur ein kurzes freies Ende vorhanden ist, auf das die Kupplungen mit einer Einführseite aufgesteckt werden. Dabei sind die kurzen freien Enden der einzelnen Glasfasern so stabil, daß die Kupplungen frei getragen werden.

Die Klemmen selbst sind dabei von unten nach oben gesehen hintereinander angeordnet und zwar mit einer in Richtung des von unten nach oben gehenden Informationsflusses leicht geneigter Klemmenöffnung.

Durch diese Maßnahme wird einmal erreicht, daß bei der Fertigung und Ausrüstung des Gestells zunächst zwar für jedes mögliche Kabelende eine Klemme vorgesehen werden muß, daß aber Kupplungen in einem Gestell nur in solcher Stückzahl benötigt werden, wie tatsächlich später Glasfaserenden in das Gestell eingezogen werden.

Weiter ist durch diese Anordnung garantiert daß die von unten nach oben auf einer Seite des Gestells führenden ersten Anschlußleitungen nur wenig gekrümmt werden müssen um in die einzelnen Klemmen eingeführt werden zu können und daß darüberhinaus die an die Kupplungen sich dann anschließenden zweiten Anschlußleitungen, ebenfalls sog. Pigtails, nur eine entsprechende Krümmung in umgekehrter Richtung aufweisen müssen, um dann oben aus dem Gestell zum eigentlichen Endgestell herausgeführt zu werden.

Gemäß einer vorteilhaften Ausgestaltung empfiehlt es sich als Klemmen einfache Druckknopfklemmen zu verwenden, wobei die Klemmflächen vorzugsweise mehrkantig ausgebildet werden, um die im einzelnen eingeführten Glasfasern mit ihrer Umhüllung auch bei nur kleinem Druck gegen Verdrehung zu sichern. Dies ist deshalb von Bedeutung, da ja auf die freien Ende der Anschlußleitungen, die durch die Klemmen hindurchschauen, Kupplungen aufgesetzt sind, an denen beim Lösen und Verbinden gelegentlich eine gewisse Drehkraft ausgeübt wird, die aber nicht zu einer Verdrehung der Glasfaser-Anschlußleitungen führen soll und darf.

Weitere Merkmale eines Verteilergestells nach der Erfindung und die Vorteile, die bei der Realisierung gegeben sind, werden im folgenden in Verbindung mit der anliegenden Zeichnung erläutert.

In der Zeichnung zeigen:

Fig. 1 in perspektivischer und teilweise aufgeschnittener Form den Grundaufbau eines Verteilergestells nach der Erfindung mit einigen Einzelheiten zur pauschalen Erläuterung,

Fig. 2 eine entsprechende Frontansicht des in Fig. 1 dargestellten Verteilergestells,

Fign. 3 - 5 den konstruktiven Aufbau der Verteilerplatten für die einzelnen Klemmen für die Enden der Anschlußleitungen und

Fign. 6 + 7 den Prinzipaufbau einer Glasfaserklemme, wie sie für die Zwecke der Erfindung in einem Verteilergestell in großer Stückzahl verwendet werden können.

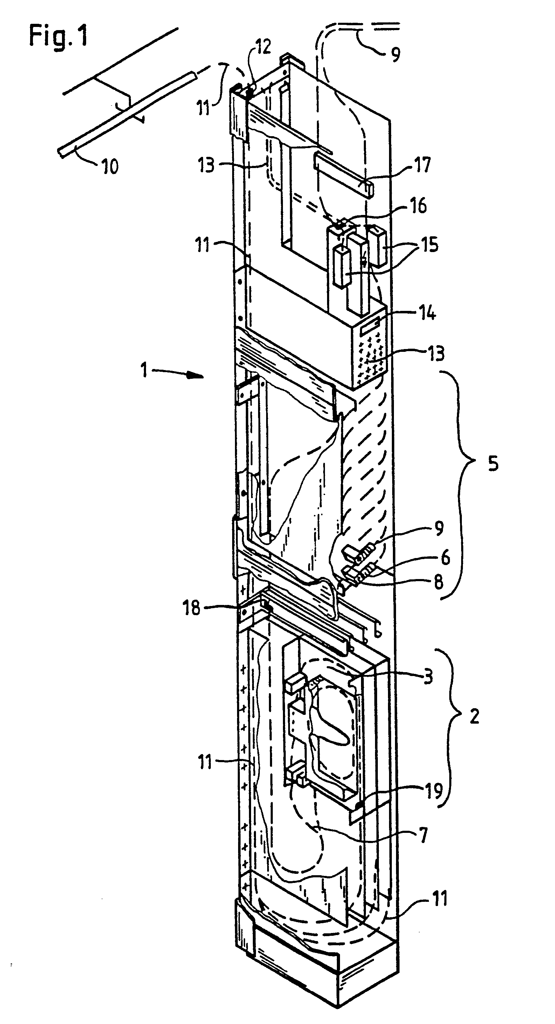

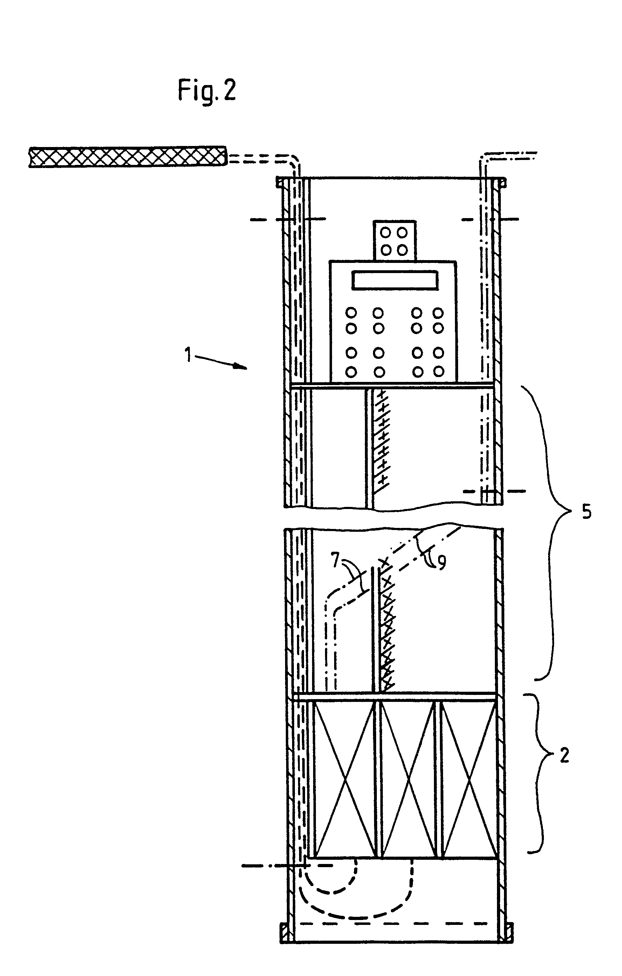

Zunächst wird anhand der Fign. 1 und 2 der Grundaufbau eines Verteilergestells für Glasfaserkabelenden mit einigen Details und Ausgestaltungsmöglichkeiten erläutert.

In diesen Fign. ist mit 1 pauschal das gesamte Gestell bezeichnet, das im unteren Teil einen Aufnahmebereich 2 zur Aufnahme der Spleißverbindungen aufweist. Dabei wird ein Glasfaserkabel 10 am Eingang zu dem Verteilergestell 1 in entsprechende Faserbündel 11 aufgeteilt, die zunächst durch einen elastischen Schlauch (nicht gezeigt) zusammengehalten sind. Um das Kabel selbst von jeglichem Zug zu entlasten ist ein Halter 12 vorgesehen. Hinter diesem Halter werden die im allgemeinen in einem Glasfaserkabel für Überwachungs- und Meßzwecke mitgeführten elektrischen Leiter 13 aus dem Bündel herausgeführt.

Die Glasfaserbündel 11 werden seitlich ganz nach unten in dem Gestell geführt, wo sie im Aufnahmebereich 2 Bündel für Bündel in einzelne Magazine 3 geführt werden. In diesen Magazinen 3, die an sich herausnehmbar sind und die jedes mit entsprechend der Anzahl der Fasern eines Bündels, also beispielsweise mit 12 Taschen ausgerüstet sind, mit ersten Anschlußleitungen 7 verspleißt, d.h. in den Magazinen sind die Schweißstellen zwischen Kabelende und den ersten Anschlußleitungen 7 untergebracht. Um das Verschweißen zu erleichtern sind die Magazine einzeln herausnehmbar und dementsprechend muß eine große Schleife des Kabelendes 11 und der ersten Anschlußleitungen 7 vorgesehen werden.

Oberhalb des Aufnahmebereiches für die Spleißverbindungen ist der eigentliche Kupplungseinsatz 5 vorgesehen. In diesem Raum sind übereinander, was in der Fig. aus Übersichtlichkeitsgründen nur angedeutet werden kann, Klemmen 8 vorgesehen, in die die ersten Anschlußleitungen geführt sind, d.h. durch die die freien Enden der ersten Anschlußleitungen gesteckt und verklemmt sind. Auf der Rückseite der Klemmen 8 werden die einzelnen Glasfaser-Kupplungen 6 aufgesteckt und auf der den Klemmen 8 abgewandten Seite der Kupplungen 6 münden dann die freien Enden von zweiten Anschlußleitungen 9.

Oberhalb dieses Kupplungseinsatzes mit beispielsweise 30 übereinander anzuordnenden Klemmen und ggf. auch Kupplungen ist dann bei dem wiedergegebenen Ausführungsbeispiel ein Löteinsatz vorgesehen mit einem vorverdrahteten Buchsenfeld 13, einem Typenschild 14, Lötösen 15 sowie einer Halterung 16 für die Kupferleitungen 6. Diese Glieder dienen für eine zusätzliche Überwachung und Datenaustausch, über die Kupferleitungen 13, die beispielsweise in dem Glasfaserkabel 10, wie erwähnt, mitgeführt sind. Diese Einrichtungen sind nicht Gegenstand der vorliegenden Erfindung.

Zur Entlastung der einzelnen Anschlußleitungen sind an geeigneter Stelle, z. B. rechts oben bei 17, zusätzliche Zugentlasungsglieder, in die die einzelnen Glasfaseranschlußleitungen oder aber auch Bündel davon eingespannt und gehalten werden können, vorgesehen.

Die endgültige Verdrahtung eines derartigen Verteilergestells geschieht dadurch, daß zunächst das Lichtleiterkabel über eine der Höhe des Gestells entsprechende Länge zuzüglich der in Verbindung mit der Führung im Aufnahmebereich für die Spleißverbindungen entsprechenden Länge von seinem Mantel befreit wird. Im oberen Krümmungsbereich wird dann ein flexibles Rohr über die so geöffneten Faserbündel geschoben und mit Hilfe des flexiblen Rohrs wird die Einheit Rohr und Faserbündel an dem Halter für den flexiblen Schlauch 12, einem Kabelbinder befestigt. Die einzelnen Faserbündel werden dann in dem im linken Bereich extra vorgesehenen Raum nach unten verlegt und wiederum an einem Halter für die Faserbündel 18 gesichert. Die Enden der Faserbündel werden dann freigelegt und in die einzelnen Magazine 3 geführt und ggf. beim Eintritt in diese Magazine über weitere Kabelbinder 19 gehalten.

Anschließend werden die einzelnen ersten flexiblen Anschlußleitungen 7 verlegt, wobei dafür zu sorgen ist, daß das in den einzelnen Spleißmagazinen verbleibende Ende für alle Anschlüsse etwa gleich lang ist, so daß je nach der Höhe der für die einzelne Anschlußleitung vorgesehenen Klemme 8 unterschiedliche Längen für die Anschlußleitungen bereitgestellt werden müssen.

Die freien Enden dieser ersten flexiblen Anschlußleitung werden in die entsprechenden Klemmen 8 eingeführt und dort zunächst gehalten.

Nunmehr können diese ersten flexiblen Anschlußleitungen 7 durch Herausnehmen der einzelnen Magazine 3 mit den Enden der Lichtleiterfasern verspleißt werden und unter Berücksichtigung eines Mindestradius in den einzelnen in den Magazinen vorzusehenden Taschen abgelegt werden.

Anschließend werden dann die zweiten flexiblen Anschlußleitungen 9 von oben eingeführt und in entsprechender Länge zu den einzelnen auf freien Enden der ersten flexiblen Anschlußleitungen 7 aufgesetzten Kupplungen 6 geführt.

Die oben austretenden Anschlußleitungen 9 werden zusammengefaßt in einem Halter 17 gehalten und dann gemeinsam zu entsprechend vorgesehen Kabelkanälen geführt.

Die Verlegung der Kupferadern 13 zu dem oberen Löteinsatz erfolgt in an sich bekannter Weise.

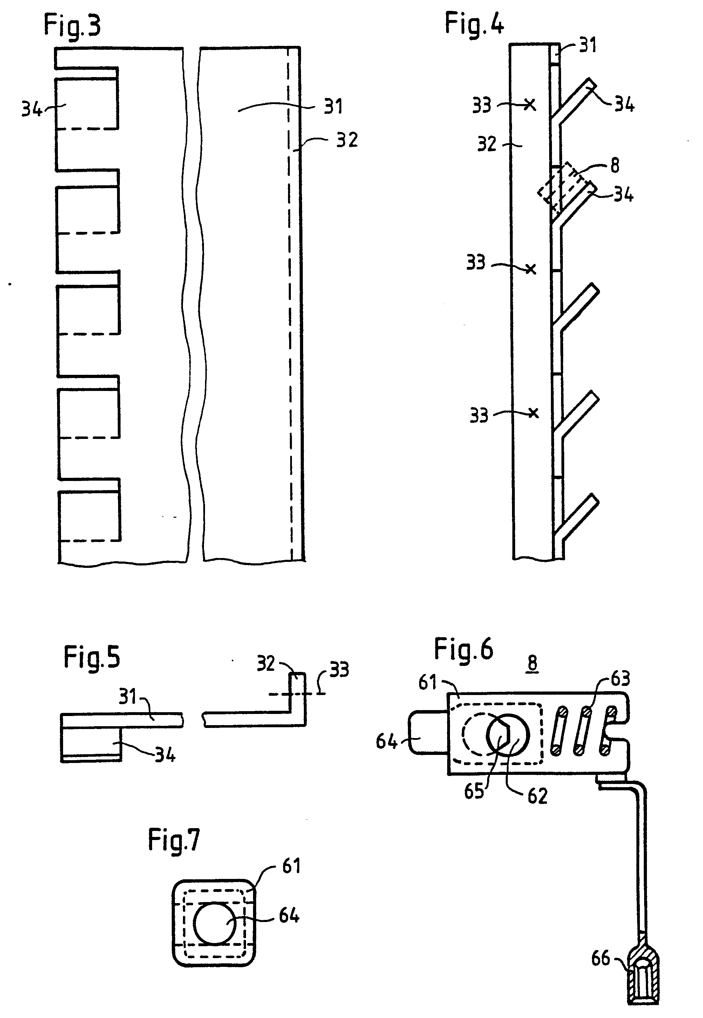

Anhand der Fign. 3 - 5 wird im folgenden der konstruktive Aufbau der Halteplatten für die Klemmen 8, in die die freien Enden der ersten flexiblen Anschlußleitungen 4 eingesetzt werden sollen, erläutert.

Gemäß der Ausführungsform nach den Fign. 3 - 5 werden diese Klemmen 8 am vorderen einer in das Gestell nahe der Mitte eingesetzten Halteplatte 31 befestigt. Hierzu ist die Halteplatte 31 an der der Rückwand des Gestells benachbarten Seite mit einem abgebogenen Fuß 32 versehen, über den beispielsweise durch Punktschweißstellen 33 die Halteplatte dauerhaft befestigt wird. Der nach vorn stehende Rand der Halteplatte 31 ist seitlich eingeschnitten und die so entstehenden Lappen 34 werden in der Draufsicht in Fig. 2 gesehen, nach rechts schräg abgewinkelt, so daß sie gegenüber der Höhenerstreckung des Gestells leicht geneigt sind.

Auf diese einzelnen Lappen 34 werden dann die Klemmen 8 so befestigt, daß die Durchtrittsöffnungen für die freien Enden der ersten flexiblen Anschlußleitungen leicht nach oben geneigt sind wie in den Fign. 1 und 2 auch angedeutet.

Aus Übersichtlichkeitsgründen ist in der Fig. 4 lediglich eine Klemme als gestricheltes Rechteck auf dem zweiten Lappen 34 des Halteteils 31 eingezeichnet, wobei die Durchtrittsöffnung für das freie Ende der Anschlußleitung angedeutet ist.

Für den konstruktiven Aufbau empfiehlt es sich die Halteplatte nicht als Einheit für den gesamten Aufnahmeraum für die Kupplungen auszugehtalten, sondern in mehreren Stücken, imdem beispielsweise jeder eineinzele Halteplatte etwa 10 Klemmen zugeordnet werden.

Für diese Ausbildung ist es zunächst gleichgültig, wie die auf den Haltelappen 34 zu befestigenden Klemmen ausgebildet sind. Entscheidend ist, daß die Klemmen verhältnismäßig wenig Raum beanspruchen und das freie Ende einer Anschlußleitung so halten, daß dieses zwar nicht gequetscht aber doch gegen Verdrehung gesichert ist.

Eine Ausführungsform mit Prinzipaubau für eine derartige Klemme ist in den Fign. 6 und 7 schematisch wiedergegeben. Die in der Fig. 6 in Seitenansicht und in Fig. 7 in Draufsicht auf den Betätigungsdruckknopf wiedergegebene Klemme 8 weist dabei einen im wesentlichen quaderförmigen Grundkörper 61 mit etwa quadratischem Querschnitt auf, in welchem eine Öffnung 62 zum Durchstecken des freien Endes einer Anschlußleitung vorgesehen ist. In dem Körper 61 wird gegen die Kraft einer Feder 63 mittels Fingerdruckes auf ein Druckstück 64 die in diesem Druckstück vorhandene Öffnung 65 verschoben bis beide Öffnungen fluchtend sind. In diesem Zustand kann dann das freie Ende einer Glasfaserleitung eingeschoben werden. Dabei wird dann durch die Kraft der Feder 63 bei Wegnehmen des Fingers die Glasfaser eingespannt, wobei durch eine Formgebung der Öffnung 65 mit trapezförmigen Querschnitt eine gute Sicherung der Glasfaser gegen Verdrehung garantiert ist.

Erfindungsgemäß soll unmittelbar auf das Ende der durch eine Klemme 8 geführten Lichtleiters ein Kupplungsstück aufgesetzt werden, das im praktischen Betrieb auch immer wieder gelöst werden muß. Aus diesem Grund ist gem. einer vorteilhaften Weiterbildung des Erfindungsgedankens jeder Klemme 8 eine Schutzhülse 66 an einer flexiblen Halteschnur zugeordnet, die immer dann auf ein freies Glasfaserende gesteckt wird, wenn über die Kupplung ein Ende freigegeben wird. Dies ist insbesondere auch bei der Montage von Bedeutung, wenn zunächst nur die Enden aller flexiblen Anschlußleitungen eingesteckt sind, während noch keineswegs alle Leitungen voll belegt und über Kupplungen weitergeführt werden müssen.

Derartige Schutzhülsen sind in Verbindung mit der Glasfasertechnik hinreichend bekannt und nicht Gegenstand der vorliegenden Erfindung. Für die vorliegende Erfindung ist allein wesentlich, daß sie dort ortsfest bereitgestellt werden, wo sie im späteren Betrieb auch ständig benötigt werden.

Die vorliegende Erfindung wurde im Interesse der Nachvollziehbarkeit durch Fachleute sehr ausführlich beschrieben. Wesentlich und von grundlegender Bedeutung ist dabei die Leitungsführung aus den einleitend genannten Gründen. Aufbau von Klemmen, Anordnung der Klemmen ggf. in mehreren parallelen Ebenen nebeneinander oder hintereinander sowie Ausgestaltung und Anordnung von Kabelbinder, Halter für Einzelleitungen usw. liegt im Rahmen fachmännischen Könnens und ist von Fall zu Fall zu realisieren. Im besonderen kann es dabei vorteilhaft sein, parallel nebeneinander angeordnete Halteplatten in ihrer Plattenebene relativ zueinander verschieblich anzuordnen und mit gegeneinander versetzten Hältelappen zu versehen, so daß bei der Montage an Kupplungen einer Halteplatte, diese etwas herausgezogen und/oder die andere zurückgeschoben werden kann. Wesentlich ist, daß bei den durch die Postverwaltungen vorgegebenen Raum mit der vorliegenden Erfindung erstmals eine Leitungsführung mit Zugang zu allen einzelnen Kupplungen ermöglicht wird, bei der die an die Glasfasertechnik gestellten Bedingungen eingehalten werden können.

**Patentansprüche**

1. Verteilergestell für Glasfaser-Kabelenden zur Aufteilung der Faserbündel bzw. der einzelnen Glasfasern eines Glasfaserkabels auf eine der Zahl der Glasfasern entsprechenden Anzahl von für Meßzwecke hinsichtlich jeder Glasfaser getrennt lösbaren, einzeln zugänglichen Glasfaserkupplungen, dadurch gekennzeichnet, daß das Gestell (1) über die Höhe in mindestens zwei Abschnitte unterteilt ist nämlich in einen Aufnahmebereich (2), vorzugsweise in Form eines oder mehrerer Magazine (3) zur Aufnahme der Spleißverbindungen zwischen den einzelnen Glasfasern des Kabels und ersten flexiblen Anschlußleitungen (4) (sog. Pigtails), und in einen Bereich (5) zur Aufnahme der Glasfaserkupplungen (6) anschließt, und daß die in den Kupplungen mündenden freien Enden der ersten Anschlußleitungen (7) nahe ihren Enden in Klemmen (8) gehalten sind und mit ihren Enden die Kupplungen frei tragen zur Verbindung mit je einer weiteren zum Auswerte-Endgestell führenden zweiten Anschlußleitung (9).

2. Verteilergestell nach Anspruch 1, dadurch gekennzeichnet, daß die einzelnen Klemmen (8) in Richtung von unten nach oben gesehen hintereinander mit in dieser Richtung geneigter Klemmenöffnung (62) angeordnet sind.

3. Verteilergestell nach Anspruch 1 und 2, dadurch gekennzeichnet, daß die Klemmen als federbelastete Druckknopfklemmen (8) vorgesehen sind.

4. Verteilergestell nach Anspruch 3, dadurch gekennzeichnet, daß die Klemmflächen der Klemmen mehrkantig ausgebildet sind, um ein Verdrehen der Enden der Anschlußleitungen in den Kupplungen zu verhindern.

5. Verteilergestell nach Anspruch 1 bis 4, dadurch gekennzeichnet, daß über die Breite des Gestells gesehen die Klemmen außermittig derart angeordnet sind, daß die auf die durch die Klemmen geführten Enden der Anschlußleitungen aufzubringenden Kupplungen nahe der Mitte des Gestelles zu liegen kommen.

6. Verteilergestell nach einem der vorhergehenden Ansprüche, dadurch gekennzeichnet, daß zum Einführen des Kabelendes ein seitlicher Schacht zur Führung der von oben eingeführten und zu Faserbündeln aufgetrennten Kabelenden nach unten zum Aufnahmebereich (2)

7. Verteilergestell nach einem der vorhergehenden Ansprüche, dadurch gekennzeichnet, daß im Bereich der Kabeleintritts- und der Anschlußleitungsaustrittsstellen sowie im Bereich enger Umlenkung Entlastungshalter vorgesehen sind.

8. Verteilergestell nach Anspruch 5, dadurch gekennzeichnet, daß jeder Klemme (8) eine an sich bekannte Schutzhülse zum Aufstecken auf ein vom Schutzmantel befreites Glasfaserende fest zugeordnet ist.

9. Verteilergestell nach einem der Ansprüche 1 bis 5, dadurch gekennzeichnet, daß die Klemmen (8) auf mehrere parallel nebeneinander angeordneten und relativ zueinander in der Plattenebene verschieblichen Halteplatten verteilt sind, deren Haltelappen (34) gegeneinander versetzt angeordnet sind.

**Claims**

1. A distribution rack for the ends of glass fibre cables for apportioning the bundles of fibres, or the individual glass fibres of a glass fibre cable, as the case may be, to one of a number of glass fibre couplings corresponding to the number of glass fibres, which, for measuring purposes, are separately releasable and individually accessible in respect of each glass fibre, <u>characterised in</u> that the rack (1) is subdivided as regards its height into at least two sections, namely a reception region (2), preferably in the form of one or more magazines (3) to receive the spliced connections between the individual glass fibres of the cable and first flexible connection leads (4) (so-called pigtails), and a region (5) for the reception of the glass fibre couplings; and that the free ends of the first connection leads (7) opening into the couplings are held near their ends in clamps (8) and at their ends carry the couplings free for connection with a further secondary connection lead (9) in each case leading to the evaluation output rack (5).

2. A distribution rack as claimed in Claim 1, <u>characterised in</u> that the individual connectors (8) viewed in an upwards direction are arranged one behind another with a clamping opening (62) inclined in this direction.

3. A distribution rack as claimed in Claim 1 and 2, <u>characterised in</u> that the clamps are provided in the form of spring-loaded press-button clamps (8).

4. A distribution rack as claimed in Claim 3, <u>characterised in</u> that the clamping surfaces of the clamps are of polygonal shape to prevent twisting of the ends of the connection leads in the couplings.

5. A distribution rack as claimed in Claims 1 to 4, <u>characterised in</u> that, viewed across the width of the rack, the clamps are arranged eccentrically in such a way that the couplings which are to be brought to the ends of the connecting leads which are led through the clamps come to lie near the middle of the rack.

6. A distribution rack as claimed in one of the previous Claims, <u>characterised in</u> that for the insertion of the cable end, a lateral shaft is provided for leading the cable ends inserted from above and divided up into fibre bundles, downwardly to the reception region (2).

7. A distribution rack as claimed in one of the previous Claims, <u>characterised in</u> that relief holders are provided in the region of the cable entry points and of the connection lead exit points, as well as in the region of tight turns.

8. A distribution rack as claimed in Claim 5, <u>characterised in</u> that to each clamp (8) there is permanently allotted a protection sleeve known <u>per se</u> for slipping on to an end of a glass fibre freed from the protective sheath.

9. A distribution rack as claimed in Claim 1 to 5, <u>characterised in</u> that the clamps (8) are distributed on to a plurality of supporting plates arranged parallel to one another and movable with respect to one another in the plane of the plates, the holding lugs (34) of which are arranged to be staggered with respect to one another.

**Revendications**

1. Répartiteur pour les extrémités des câbles à fibres de verre servant à répartir les faisceaux de fibres ou les fibres de verre individuelles d'un câble à fibres de verre sur un nombre de coupleurs de fibres de verre, accessibles individuellement, détachables séparément pour chaque fibre de verre pour des opérations de mesure, et correspondant au nombre de fibres de verre, caractérisé par le fait que le répartiteur est subdivisé, dans le sens de la hauteur, en deux sections, à savoir, une zone de réception (2), de préférence sous la forme d'un ou de plusieurs magasins (3) servant à recevoir des jonctions épissées entre les différentes fibres de verre du câble et des premiers conducteurs de raccordement (4) (dits Pigtails), et une zone (5) servant à recevoir des coupleurs de fibres de verre (6), et que les extrémités libres des premiers conducteurs de raccordement (7), qui débouchent dans les coupleurs, sont maintenues près de leurs extrémités dans des bornes de connexion (8) et portent, par leurs extrémités, librement les coupleurs, pour établir la liaison avec un second conducteur de raccordement (9) menant au bâti d'extrémité d'évaluation.

2. Répartiteur selon la revendication 1, caractérisé par le fait que les différentes bornes de connexion (8) sont disposées, du bas vers le haut, les unes derrière les autres avec des ouvertures de serrage (62) inclinées sur cette direction.

3. Répartiteur selon la revendication 1 et 2, caractérisé par le fait que les bornes sont prévues sous la forme de bornes à boutons-poussoirs (8) chargés par des ressorts.

4. Répartiteur selon la revendication 3, caractérisé par le fait que les surfaces de serrage des bornes sont polygonales afin d'empêcher une torsion des extrémités des conducteurs de raccordement dans les coupleurs.

5. Répartiteur selon l'une des revendications 1 à 4, caractérisé par le fait que, en regardant sur la largeur du répartiteur, les bornes sont disposées avec excentrement de façon que les coupleurs destinés à recevoir les extrémités des conducteurs de raccordement, et qui passent par les bornes, se situent près du milieu du répartiteur.

6. Répartiteur selon l'une des revendications précédentes, caractérisé par le fait que pour introduire l'extrémité du câble, il est prévu une cheminée latérale pour guider vers le bas et vers la zone de réception (2) les extrémités du câble qui sont introduites par le haut et qui sont subdivisées en faisceaux de fibres.

7. Répartiteur selon l'une des revendications précédentes, caractérisé par le fait que dans la zone de l'entrée du câble et de la sortie des conducteurs de raccordement, de même que dans la zone d'une courbure prononcée, des supports de soulagement sont prévus.

8. Répartiteur selon la revendication 5, caractérisé par le fait qu'à chaque borne de connexion (8) est associée, de façon fixe, une douille de protection, en soi connue, destinée à être montée sur une extrémité de fibre de verre dégagée de son enveloppe de protection.

9. Répartiteur selon l'une des revendications 1 à 5, caractérisé par le fait que les bornes de connexion (8) sont réparties sur plusieurs plateaux de support disposés parallèlement les une à côté des autres et susceptibles d'être déplacés l'un par rapport à l'autre dans le plan des plateaux, lesquels plateaux de support possèdent des pattes de support (34), décalées l'une par rapport à l'autre.

**Fig.1**

# Fig. 2

0 149 250

**Fig.3**

**Fig.4**

**Fig.5**

**Fig.6**

**Fig.7**